# EUROPÄISCHE PATENTANMELDUNG

(11) **EP 2 140 998 A1**
(43) Veröffentlichungstag der Anmeldung: **06.01.2010**
(21) Anmeldenummer: 08011774.0
(22) Anmeldetag: 30.06.2008
(51) Int. Cl.: B29C 47/88, B29C 47/92

(54) **Hochleistungsinnenkühlvorrichtung**

(71) Anmelder: Kdesign GmbH, 53639 Königswinter (DE)
(72) Erfinder: Zimmermann, Richard, Dipl. Ing., 53127 Bonn (DE)
(74) Vertreter: Neumann, Ernst Dieter

(57) **Zusammenfassung**

Vorrichtung zum Kühlen eines Folienschlauches bei der Blasfolienherstellung zur Montage auf einem Blaskopf 11, aus dessen Ringdüse 12 der Folienschlauch 13 in Herstellrichtung nach oben austritt, wobei die Vorrichtung zumindest einen den Folienschlauch umschließenden äußeren Kühlgasring 51, 61, 71 mit innenliegenden Kühlgasringdüsen 45, 46; 65; 75, 76, 79 und eine Innenkühlvorrichtung 20 innerhalb des Folienschlauches mit außenliegenden Kühlgasringdüsen 27, 28, 37, 38 und mit einer Kühlgasabsaugung 14 umfaßt, wobei die Innenkühlvorrichtung 20 mindestens einen inneren Kühlgasring 21, 31 mit zwei übereinanderliegenden Kühlgasringdüsen 27, 28, 37, 38 aufweist, daß in Herstellrichtung hinter der unteren der Kühlgasringdüsen 27, 37 ein erster ringförmiger Leitkörper 25, 35 angeordnet ist, der mit der Folienschlauchwandung ein ersten Ringspalt 17 geringerer Dicke bildet, daß in Herstellrichtung hinter der oberen der beiden Kühlgasringdüsen 28, 38 ein zweiter ringförmiger Leitkörper 15, 26, 36, 41 angeordnet ist, der mit der Folienschlauchwandung einen zweiten Ringspalt 19 größerer Dicke bildet.

## Beschreibung

Die Erfindung betrifft eine Vorrichtung zum Kühlen eines Folienschlauches bei der Blasfolienherstellung zur Montage auf einem Blaskopf, aus dessen Ringdüse der Folienschlauch in Herstellrichtung nach oben austritt, wobei die Vorrichtung zumindest einen den Folienschlauch umschließenden äußeren Kühlgasring mit innenliegenden Kühlgasringdüsen und zumindest eine Innenkühlvorrichtung innerhalb des Folienschlauches mit außenliegenden Kühlgasringdüsen und mit einer Kühlgasabsaugung umfaßt. Als Kühlgas wird üblicherweise Kühlluft verwendet. In bestimmten Anwendungsfällen ist jedoch auch die Verwendung von Inertgas möglich. Die Mengenströme des austretenden Kühlgases können über dem Umfang variabel geregelt werden.

Bei der Blasfolienherstellung beziehungsweise der Blasfolienextrusion wird thermoplastisches Material über einen Extruder in einen Blaskopf gepreßt, aus dessen Ringdüse ein dünnwandiger Folienschlauch austritt, der nach oben abgezogen wird, um anschließend flachgelegt und aufgewickelt zu werden.

Der zunächst noch aus plastisch verformbaren Material bestehende Folienschlauch ist einem inneren Überdruck ausgesetzt und wird unmittelbar nach dem Austritt aus der Ringdüse des Blaskopfes von außen und von innen im wesentlichen ringförmig mit Kühlgas angeblasen und dadurch abgekühlt. Vom Austritt aus der Ringdüse ausgehend wird der Durchmesser des Folienschlauches für eine bestimmte Strecke weitgehend konstant gehalten, um nach dem Durchgang durch den zumindest einen Außenkühlring zunehmend erweitert werden. Dieses Erweitern des Folienschlauches wird durch den Innendruck im Folienschlauch und einen durch die Kühlgasführung im Außenkühlring erzeugten Venturieffekt verursacht. Durch das Kühlgas findet schließlich ein Erstarren des thermoplastischen Materials statt, wonach der Folienschlauch im weiteren Verlauf seinen Durchmesser beibehält. Bis zum Erreichen des Außenkühlrings verhält sich die Folienschlauchwandung instabil, insbesondere, wenn sie von einer Innenkühlvorrichtung in Radialrichtung in Bezug auf die Herstell- und Abzugsrichtung angeblasen wird.

Aus der DE 33 11 932 C2 und der DE 33 33 397 A1 sind Außen- und Innenkühlgasringe bekannt, die jeweils einen einzigen druckbeaufschlagten Kühlgasaustritt haben der hinter einem sogenannten Vorflügelelement austritt und an den sich ein Flügelprofil anschließt. Hierbei soll sowohl aus dem Bereich vor dem Vorflügelelement als auch aus dem Bereich hinter dem Tragflügelprofil zusätzliche Kühlluft mit der aus dem Kühlgasaustritt strömenden Kühlluft befördert werden. Auch soll der Venturidüseneffekt des Tragflügelprofils die Stabilität des Folienschlauches erhöhen. Auf der Innenseite des Folienschlauches und auf der Außenseite des Folienschlauches sind einander ähnliche Innen- und Außenkühlringe abwechselnd angeordnet, wobei jedoch ein erster Innenkühlring im Anfangsbereich des Folienschlauches kein Vorflügelelement aufweist.

Der vorliegenden Erfindung liegt die Aufgabe zu Grunde, eine Innenkühlvorrichtung bereitzustellen, die wirksam zur Folienschlauchkühlung beiträgt und stabilisierend auf den Folienschlauch bis zum Erreichen des zumindest einen Außenkühlgasringes einzuwirkt, der seinerseits stabilisierende Wirkung auf den Folienschlauch hat.

Die Lösung besteht darin, daß die Innenkühlvorrichtung mindestens einen inneren Kühlgasring mit zwei übereinanderliegenden Kühlgasringdüsen aufweist, daß in Herstellrichtung hinter der unteren der Kühlgasringdüsen ein erster ringförmiger Leitkörper angeordnet ist, der mit der Folienschlauchwandung einen ersten Ringspalt geringerer Dicke bildet, daß in Herstellrichtung hinter der oberen der beiden Kühlgasringdüsen ein zweiter ringförmiger Leitkörper angeordnet ist, der mit der Folienschlauchwandung einen zweiten Ringspalt größerer Dicke bildet.

Mit den hier angegebenen Mitteln ist eine erhöhte Innenkühlgasmenge insbesondere bei erhöhter Ausblasgeschwindigkeit möglich, ohne daß ein Pumpen des Folienschlauches zu befürchten ist. Vielmehr kann bei geeigneter Formgebung der Folienschlauch im Anfangsbereich nach der Ringdüse des Blaskopfes stabilisiert werden. In bevorzugter Weise ist vorgesehen, daß hinter der oberen der beiden Kühlgasringdüsen ein Leitkörper angeordnet ist, der zusammen mit dem Folienschlauch einen erweiterten Ringspalt bildet und damit einen Venturieffekt auf die Innenseite des Folienschlauches ausübt. Die Vorrichtung ist insbesondere in Kombination mit einem Außenkühlring vorgesehen und geeignet, der in axialem Anstand von dem Blaskopf angeordnet ist, um einen Folienschlauch mit Hals, das heißt mit über eine gewisse Länge weitgehend konstantem Durchmesser zu erzeugen. Im Bereich diese Halses wird erfindungsgemäß die neuartige Innenkühlvorrichtung eingesetzt, die den Folienschlauch von der Innenseite im wesentlichen tangential anbläst und mit einem Venturieffekt stabilisiert. Durch den stabilisierenden Venturieffekt ist eine Steigerung der ausgebrachten Kühlgasmenge möglich und damit eine Steigerung der Kühlwirkung, ohne daß es zu Prozessinstabilitäten kommt. Es kann bei Verwendung der erfindungsgemäßen Innenkühlvorrichtung mit einer höheren Produktionsgeschwindigkeit gearbeitet werden.

In bevorzugter Ausführungsform ist vorgesehen, daß die untere der Kühlgasringdüsen des inneren Kühlgasringes im Durchmesser im wesentlichen dem ersten Leitkörper entspricht, während die obere der Kühlgasringdüsen im Durchmesser innerhalb des ersten Leitkörpers mündet wobei die Düsenöffnung der oberen Kühlgasringdüse parallel zur oder im spitzen Winkel zur Folienschlauchwandung weist. Diese Angabe des spitzen Winkels schließt sowohl eine leicht gegen die Schlauchwandung gerichtete Austrittsrichtung als auch eine leicht von der Schlauchwandung weggerichtete Austrittsrichtung ein. Es wird mit dieser Ausgestaltung eine stabilisierende Wirkung nach Art eines Venturieffektes erzielt.

Beide Kühlgasringdüsen sollen hierbei druckgasbeaufschlagt sein, wobei insbesondere eine gemeinsame Druckgasversorgung aus einem Ringkanal vorteilhaft ist.

Die obere der Kühlgasringdüsen soll bevorzugt eine Austrittsquerschnittsfläche haben, die ein mehrfaches der Austrittsquerschnittsfläche der unteren Kühlgasringdüse beträgt. Die obere Düse trägt hierbei wesentlich zur Kühlwirkung bei, während die untere Kühlgasringdüse mit ihrem Kühlgasstrom verhindert, daß der Folienschlauch mit dem inneren Kühlgasring in Kontakt kommt.

Die untere der Kühlgasringdüsen kann hierbei zwei Austrittsringspalte umfassen, die von einem gemeinsamen Ringkanal für Kühlgas gesorgt werden.

Der erstgenannte Leitkörper kann zylindrisch oder leicht konisch, nämlich sich konisch verjüngt oder sich konisch erweiternd sein.

Der zweite Leitkörper kann rein zylindrisch sein oder in einem Mittelabschnitt eine innere Einziehung aufweisen, wobei letztlich der Durchmesser des zweiten Leitkörpers nach der Einziehung geringer sein kann als vor der Einziehung.

In einer ersten Ausgestaltung kann der zweite Leitkörper durch ein Zentralrohr für die Kühlgasabsaugung gebildet werden, das aus einem Innenring, der zusammen mit dem ersten Leitkörper die zweite Kühlgasdüse bildet, nach oben austritt.

In einer anderen Ausgestaltung kann der zweite Leitkörper durch einen Innenring gebildet werden, der zusammen mit dem ersten Leitkörper die zweite Kühlgasdüse bildet, jedoch nach oben weitergeführt ist, als der ersten Leitkörper.

Nach einer weiteren Ausgestaltung kann der zweite Leitkörper ganz oder teilweise durch eine Aufsatzhülse gebildet werden, die auf den vorgenannten Innenring aufgesetzt ist, die zusammen mit dem ersten Leitkörper die zweite Kühlgasdüse bildet. Hierbei kann der genannte Innenring auf gleicher Höhe wie der erste Leitkörper oder nach oben über diesen hinaus fortgesetzt sein.

In bevorzugter Ausgestaltung, mit der eine größtmögliche Stabilisierung des Folienschlauches möglich ist, ist der zumindest eine Innenkühlring im Anfangsbereich des Folienschlauches angeordnet, insbesondere unmittelbar über der Ringdüse des Blaskopfes. Es ist allerdings auch möglich, um eine verlängerten Hals des Folienschlauches zu erzeugen, das der zumindest eine Innenkühlring mit axialem Abstand zur Ringdüse des Blaskopfes angeordnet ist, wobei dann insbesondere dieser zumindest eine Innenkühlring höhenverstellbar gegenüber der Ringdüse des Blaskopfes ausgeführt sein kann.

Für den zumindest einen Außenkühlring ist vorgesehen, daß dieser mit Abstand in Herstellrichtung nach dem zumindest einen Innenkühlring angeordnet ist, hierbei kann dieser zumindest eine Außenkühlring höhenverstellbar sein. Hierbei kann eine verbesserte Zugänglichkeit zur Ringdüse beim Anfahren des Produktionsprozesses sichergestellt werden.

Der zumindest eine Außenring kann zumindest zwei übereinanderliegende Kühlgasringdüsen aufweisen, die parallel zu oder im spitzen Winkel zur Folienschlauchwandung weisen, wobei die obere der beiden Kühlgasringdüsen einen größeren Austrittsdurchmesser hat als die untere der beiden Kühlgasringdüsen. Hiermit wird ein Aufweiten des Folienschlauches oberhalb des Halsbereiches befördert.

In besonderer Ausgestaltung kann der zumindest eine Außenkühlring eine weitere Kühlgasringdüse aufweisen, die entgegen der Herstell- und Abzugsrichtung des Folienschlauches mündet und insbesondere parallel zu oder im spitzen Winkel zur Folienschlauchwandung weist. Eine derartige im Gegenstrom ausblasende Kühlgasringdüse hat eine besonders hohe Kühlwirkung.

Zur Steigerung der Innenkühlwirkung kann vorgesehen sein, daß mit Abstand zum ersten Innenkühlring ein weiterer Innenkühlring mit im wesentlichen gleichen Merkmalen vorgesehen ist, wobei zwischen dem ersten Innenkühlring und dem weiteren Innenkühlring notwendigerweise zentrale Kühlgasabsaugmittel vorgesehen sind. Dies kann einen weiteren Ringkanal zur Kühlgasabsaugung erfordern. Der weitere Innenkühlring wird bevorzugt in Herstellrichtung ebenfalls noch vor dem zumindest einen Außenkühlring angeordnet sein.

Gemäß einer weiteren möglichen Verbesserung zum Zwecke einer gesteigerten Kühlwirkung kann ein zusätzlicher Außenkühlring vorgesehen sein, der vor dem zumindest einen Außenkühlring im Anfangsbereich des Folienschlauches angeordnet ist, insbesondere unmittelbar über der Ringdüse des Blaskopfes.

Bevorzugte Ausführungsformen der Erfindung sind in den Zeichnungen dargestellt und werden nachstehend beschrieben.
- Figur 1: zeigt eine erfindungsgemäße Kühlvorrichtung mit einem Innenkühlgasring in einer ersten Ausführung und einem höhenverstellbaren Außenkühlgasring;
a) in einer Basisausführung
b) mit einer Aufsatzhülse
- Figur 2: zeigt eine erfindungsgemäße Kühlvorrichtung mit einem Innenkühlgasring in einer abgewandelten Ausführung und einem höhenverstellbaren Außenkühlgasring;
a) in einer Basisausführung
b) in einer Aufsatzhülse
- Figur 3: zeigt eine erfindungsgemäße Kühlvorrichtung mit einem Innenkühlgasring in einer nochmals abgewandeten höhergelegten Ausführung und einem höhenverstellbaren Außenkühlring;
- Figur 4: zeigt eine erfindungsgemäße Kühlvorrichtung mit einem Innenkühlgasring nach Figur 2 und einem Außenkühlgasring nach Figur 2 sowie einem zusätzlichen Außenkühlgasring am Folienschlauchanfang;
- Figur 5: zeigt eine erfindungsgemäße Kühlvorrichtung mit einem Innenkühlring nach Figur 2 sowie einem abgewandelten Außenkühlgasring mit zusätzlicher Gegenströmung;
- Figur 6: zeigt eine erfindungsgemäße Kühlvorrichtung mit einem Innenkühlring gemäß Figur 2 und einem Außenkühlring mit Gegenströmung gemäß Figur 5 sowie einem zusätzlichen höherliegenden Innenkühlring ähnlich Figur 3.

Die Darstellungen zeigen sämtlich erfindungsgemäße Kühlvorrichtungen für einen Folienschlauch, der aus der Ringdüse eines Blaskopfes austritt und von dieser nach oben abgezogen wird, in einem Längsschnitt, wobei zumindest ein Innenkühlring am Anfang des entstehenden Folienschlauches und zumindest ein in Abzugsrichtung nachgeordneter Außenkühlring vorgesehen sind. Die dargestellten Teile sind weitgehend rotationssymmetrisch zur Mittelachse A mit Ausnahme von umfangsverteilten Kühlgaszuführstutzen und umfangsverteilten Strömungsberuhigungsvorrichtungen.

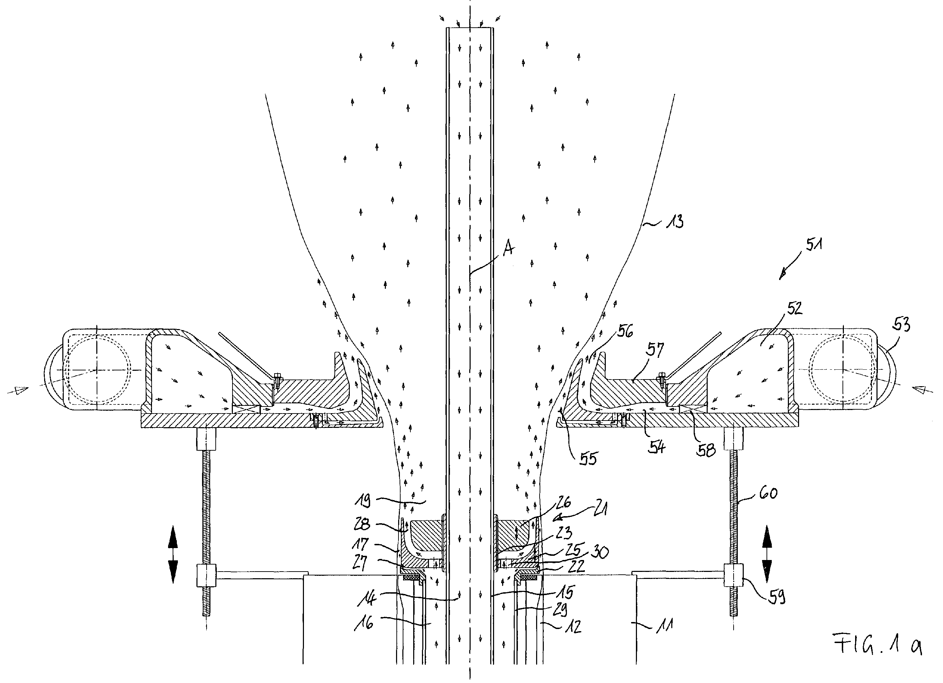

In Figur 1a ist ein Blaskopf 11 mit einer Ringdüse 12 zu erkennen, aus der ein dünnwandiger Folienschlauch 13 aus thermoplastischem Material austritt. Innerhalb der Ringdüse 12 verläuft ein Ringkanal 16 für die Innenkühlgaszuführung sowie ein Absaugkanal 14 für die Innenkühlgasabsaugung. Im Anfangsbereich des thermoplastisch verformbaren Folienschlauches 13 liegt eine erfindungsgemäße Innenkühlvorrichtung 21, die von dem Ringkanal 16 mit Kühlgas versorgt wird und durch die der Absaugkanal 14 zur Absaugung mittig hindurchführt. Der Absaugkanal 14 wird von einem Zentralrohr 15 gebildet, das durch die Innenkühlvorrichtung 21 hindurchführt; der Ringkanal 16 wird von dem Zentralrohr 15 und einem Außenrohr 29 gebildet. Ein ortsfester Ringkörper 23 der Innenkühlvorrichtung 21 ist dabei auf einem Zentralrohr 15 gehalten, das den Absaugkanal 14 bildet, während ein weiterer fester Ringkörper 22 auf dem Blaskopf 11 aufliegt. Auf dem festen Ringkörper 23 sind höhenverstellbare Ringkörper 25, 26 mittels Gewinden gehalten, mit denen die Austrittsquerschnitte einer ersten Kühlgasringdüse 27 und einer zweiten Kühlgasringdüse 28 unabhängig voneinander verändert werden kann. Aus dem Ringkanal 16 gelangt das Kühlgas unmittelbar in eine erste Kühlgasringdüse 27 und über Zufuhrbohrungen 30 im Ringkörper 23 in eine zweite Kühlgasringdüse 28. Die Kühlgasringdüse 27 ist in Abzugsrichtung des Folienschlauches 13 gerichtet, so daß das Kühlgas den Folienschlauch aus dieser Ringdüse etwa tangential anströmt. Es ist jedoch auch möglich, das Kühlgas rein radial oder im stumpfen Winkel gegen die Folienschlauchwandung austreten zu lassen. Die zweite Kühlgasringdüse 28, die im Austrittsquerschnitt wesentlich größer ist, ist ebenfalls tangential zur Folienschlauchwandung gerichtet. Hier kann abweichend auch eine Austrittsrichtung im spitzen Winkel zur Folienschlauchwandung hin oder von der Folienschlauchwandung weg gewählt werden. Hinter der Kühlgasringdüse 27 bildet sich ein dünner Ringspalt 17 aus. Hinter der Kühlgasringdüse 28 bildet das Zentralrohr 15 mit der Folienschlauchwandung einen erweiterten Ringspalt 19, der zu einer Druckreduzierung des Kühlgases in diesem Bereich führt und damit erkennbar zur einer Querschnittsverjüngung des Folienschlauches 13. Bei hohem Kühlgasaustritt hat dies eine stabilisierende Wirkung auf die Folienschlauchform.

Oberhalb dieses Ringspaltes 19 befindet sich ein Außenkühlring 51, der einen Ringkanal 52 umfaßt, an den von außen Zuführstutzen 53 umfangsverteilt anschließen. Aus dem Ringkanal 52 wird über eine Strömungsberuhigungsführung 58 ein Ringraum 54 beaufschlagt, von dem aus eine erste Kühlgasringdüse 55 und eine zweite verstellbare Kühlgasringdüse 56 mit Kühlgas versorgt werden. Die Ringdüse 56, die einen wesentlich größeren Austrittsquerschnitt hat als die Ringdüse 55, ist durch ein verdrehbares Ringteil 57 verstellbar. Die inneren Ringflächen der die Kühlgasringdüsen 55, 56 bildenden Ringteile sind so geformt, daß sich der Durchmesser des Folienschlauches 13 erweitern kann, wobei durch eine tangentiale Anströmung an den Folienschlauch ein weiterer Venturieffekt erzeugt wird, der hier zusätzlich zu dem im Folienschlauch herrschenden Innendruck zur Aufweitung des Folienschlauches führt.

Die Außenkühlvorrichtung 51 ist über Halterungen 59 mit Spindelmuttern und Gewindestangen 60 gegenüber dem Blaskopf 11 höhenverstellbar, so daß nach Produktionsbeginn eines Folienschlauches noch eine Justierung erfolgen kann.

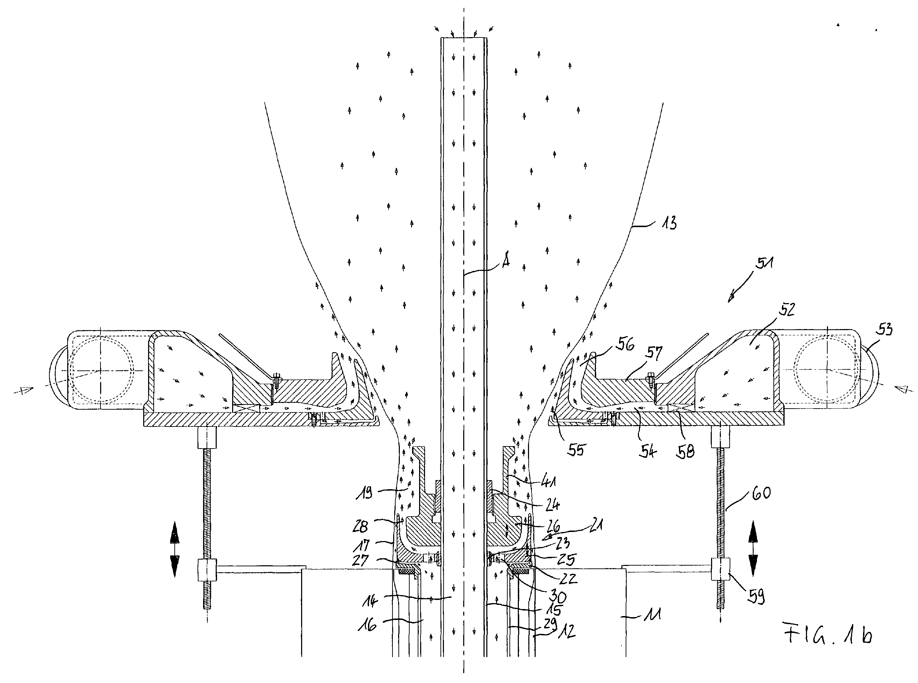

In Figur 1b sind gleiche Einzelheiten wie in Figur 1 a mit gleichen Bezugsziffern versehen. Auf die vorangehende Beschreibung wird insoweit Bezug genommen. Der Blaskopf 11 und der Außenkühlring 51 stimmen in allen Einzelheiten überein. An der Innenkühlvorrichtung 21 ist auf der Ringkörper 26 eine Aufsatzhülse 41 aufgesetzt, so daß sich der Ringspalt 19 zunächst weniger erweitert und schließlich nochmals verengt. Der höhenverstellbare Ringkörper 26 wird von einem gesonderten ortsfesten Ringkörper 24 getragen, der vom Zentralrohr 15 gehalten wird.

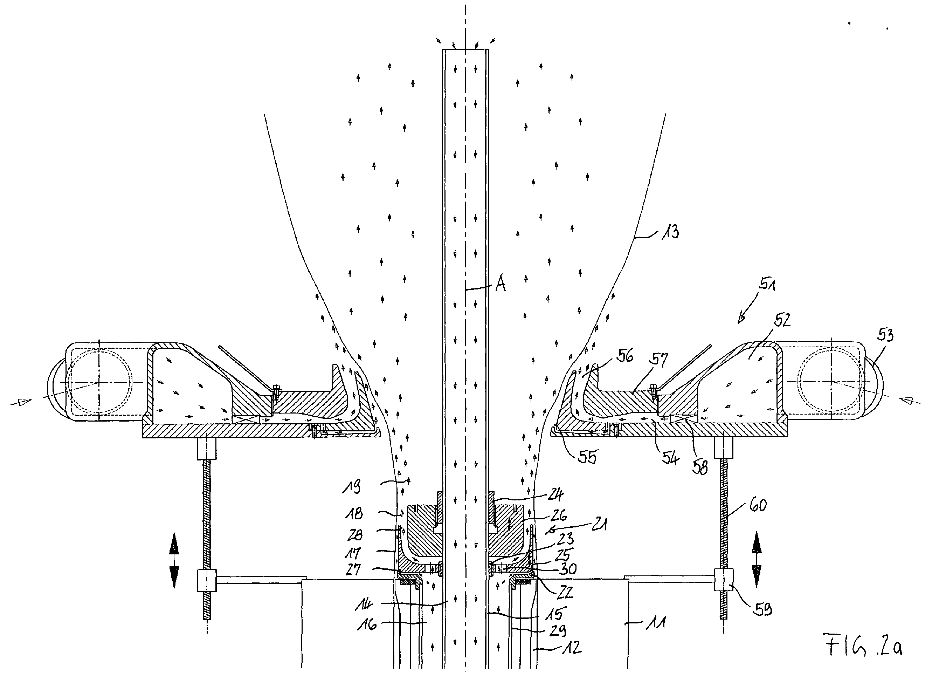

In Figur 2a ist ein Blaskopf 11 mit einer Ringdüse 12 zu erkennen, aus der ein dünnwandiger Folienschlauch 13 aus thermoplastischem Material austritt. Innerhalb der Ringdüse 12 verläuft ein Ringkanal 16 für die Innenkühlgaszuführung sowie ein Absaugkanal 14 für die Innenkühlgasabsaugung. Im Anfangsbereich des thermoplastisch verformbaren Folienschlauches 13 liegt eine erfindungsgemäße Innenkühlvorrichtung 21, die von dem Ringkanal 16 mit Kühlgas versorgt wird und durch die der Absaugkanal 14 zur Absaugung mittig hindurchführt. Der Absaugkanal 14 wird von einem Zentralrohr gebildet, das durch die Innenkühlvorrichtung 21 hindurchführt; der Ringkanal 16 wird von dem Zentralrohr 15 und einem Außenrohr 29 gebildet. Zwei ortsfeste Ringkörper 23, 24 der Innenkühlvorrichtung 21 sind dabei auf einem Zentralrohr 15 gehalten, während ein weiterer fester Ringkörper 22 auf dem Blaskopf 11 aufliegt. Auf den festen Ringkörpern 23, 24 sind höhenverstellbare Ringkörper 25, 26 mittels Gewinden gehalten, mit denen die Austrittsquerschnitte einer ersten Kühlgasringdüse 27 und einer zweiten Kühlgasringdüse 28 unabhängig voneinander verändert werden kann. Aus dem Ringkanal 16 gelangt das Kühlgas unmittelbar in eine erste Kühlgasringdüse 27 und über Zuführbohrungen 30 in eine zweite Kühlgasringdüse 28. Die Kühlgasringdüse 27 ist in Abzugsrichtung des Folienschlauches 13 gerichtet, so daß das Kühlgas den Folienschlauch aus dieser Ringdüse etwa tangential anströmt. Es ist jedoch auch möglich, das Kühlgas rein radial oder im stumpfen Winkel gegen die Folienschlauchwandung austreten zu lassen. Die zweite Kühlgasringdüse 28, die im Austrittsquerschnitt wesentlich größer ist, ist ebenfalls tangential zur Folienschlauchwandung gerichtet. Hier kann abweichend auch eine Austrittsrichtung im spitzen Winkel zur Folienschlauchwandung hin oder von der Folienschlauchwandung weg gewählt werden. Hinter der Kühlgasringdüse 27 bildet sich ein dünner Ringspalt 17 aus, hinter der Kühlgasringdüse 28 ein dicker Ringspalt 18. Hinter der Kühlgasringdüse 28 bildet das Zentralrohr 15 mit der Folienschlauchwandung einen sich nochmals erweiterten Ringspalt 19, der zu einer Druckreduzierung des Kühlgases in diesem Bereich führt und damit erkennbar zur einer Querschnittsverjüngung des Folienschlauches 13. Bei hohem Kühlgasaustritt hat dies eine stabilisierende Wirkung auf die Folienschlauchform.

Oberhalb dieses düsenartigen Ringspaltes 19 befindet sich ein Außenkühlring 51, der einen Ringkanal 52 umfaßt, an den von außen Zuführstutzen 53 umfangsverteilt anschließen. Aus dem Ringkanal 52 wird über eine Strömungsberuhigungsführung 58 ein Ringraum 54 beaufschlagt, von dem aus eine erste Kühlgasringdüse 55 und eine zweite verstellbare Kühlgasringdüse 56 mit Kühlgas versorgt werden. Die Ringdüse 56, die einen wesentlich größeren Austrittsquerschnitt hat als die Ringdüse 55, ist durch ein verdrehbares Ringteil 57 verstellbar. Die inneren Ringflächen der die Kühlgasringsdüsen 55, 56 bildenden Ringteile sind so geformt, daß sich der Durchmesser des Folienschlauches 13 erweitern kann, wobei durch eine tangentiale Anströmung an den Folienschlauch ein weiterer Venturieffekt erzeugt wird, der hier zusätzlich zu dem im Folienschlauch herrschenden Innendruck zur Aufweitung des Folienschlauches führt.

Die Außenkühlvorrichtung 51 ist über Halterungen 59 mit Spindelmuttern und Gewindestangen 60 gegenüber dem Blaskopf 11 höhenverstellbar, so daß nach Produktionsbeginn eines Folienschlauches noch eine Justierung erfolgen kann.

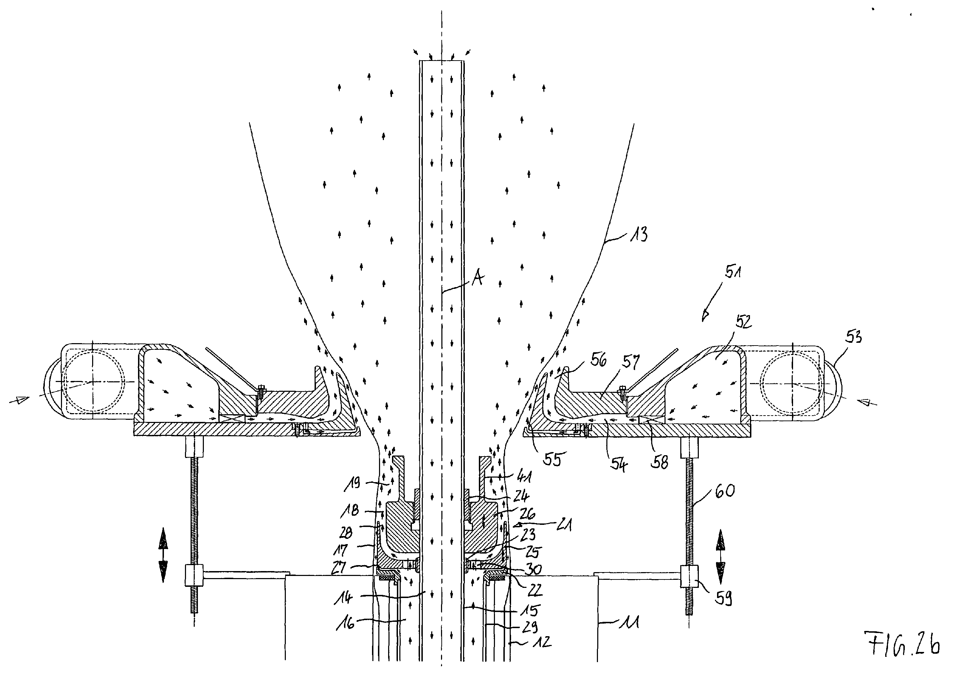

In Figur 2b sind gleiche Einzelheiten wie in Figur 2a mit gleichen Bezugsziffern versehen. Auf die vorangehende Beschreibung wird insoweit Bezug genommen. Der Blaskopf 11 und der Außenkühlring 51 stimmen in allen Einzelheiten überein. Ausschließlich an der Innenkühlvorrichtung 21 ist das Ringteil 26 mit einer Aufsatzhülse 41 ausgeführt, so daß nach dem Ringspalt 18 ein weiterer Ringspalt 19 gebildet wird, der sich zunächst nochmals erweitert und dann wieder verengt.

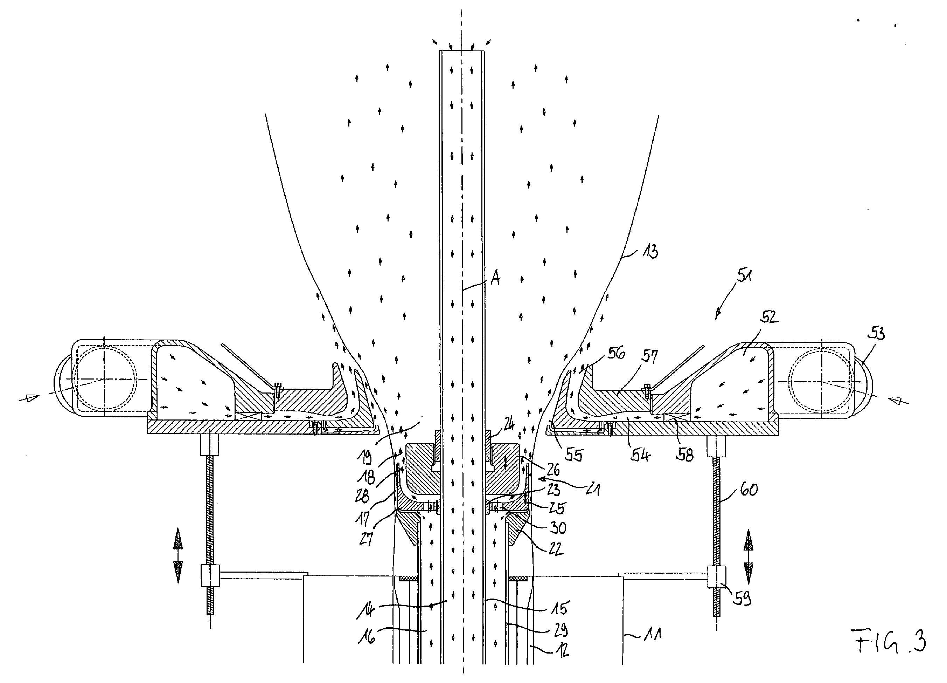

In Figur 3 sind gleiche Einzelheiten wie in Figur 2 mit gleichen Bezugsziffern versehen. Auf die vorangehende Beschreibung wird insoweit Bezug genommen. Der Blaskopf 11 und der Außenkühlring 51 stimmen in allen Einzelheiten überein. Ausschließlich an der Innenkühlvorrichtung 21 ist der Ringkörper 22 verstärkt ausgebildet und auf ein über den Blaskopf hinaus nach oben verlängerte Außenrohr 29 des Ringkanals 16 aufgesetzt. Die Innenkühlvorrichtung 21 liegt damit in einigem Abstand vom Blaskopf 11.

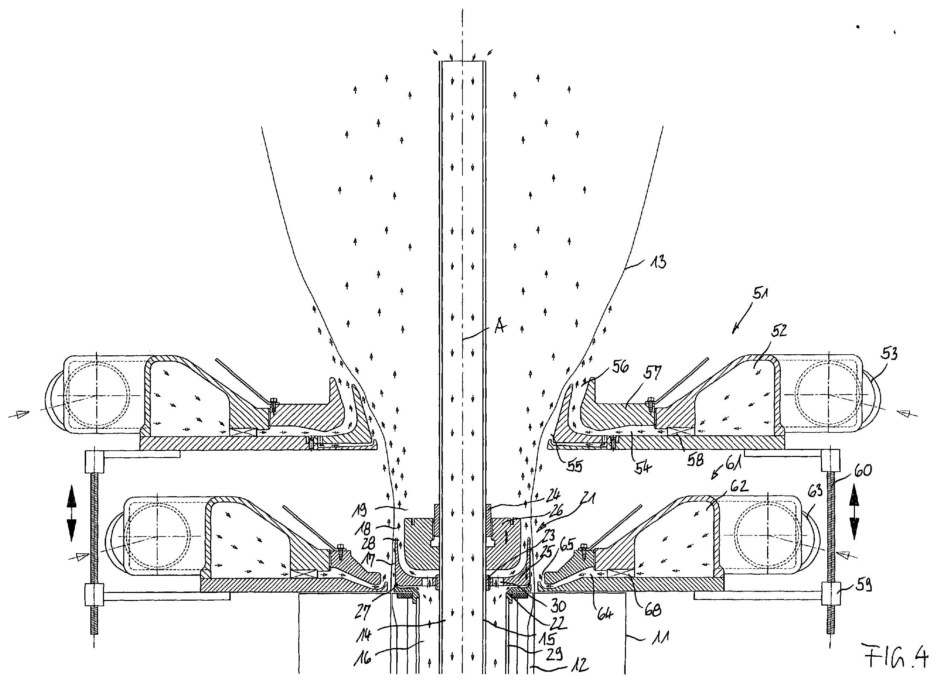

In Figur 4 sind gleiche Einzelheiten wie in Figur 2 mit gleichen Bezugsziffern beschrieben. Insbesondere der Blaskopf 11, der Innenkühlring 21 und der Außenkühlring 51 stimmen vollkommen mit der Ausführung nach Figur 2 überein. Auf die vorherige Beschreibung wird insoweit Bezug genommen. Unmittelbar oberhalb des Blaskopfes 11 befindet sich ein zusätzlicher Außenkühlring 61 mit einem Ringkanal 62, der über äußere Gaszuführstutzen 63 mit Kühlgas versorgt wird. Über eine Strömungsberührungsanordnung 68 wird hier ein einzelner Ringraum 64 mit Kühlgas versorgt, der in einer tangential zur Folienschlauchwandung gerichteten Ringdüse 65 mündet. Die Ringdüse 65 befindet sich etwa in gleicher Höhe wie die erste innenliegende Ringdüse 27 der Innenkühlvorrichtung 21. Die Halterung 59 der Verstellvorrichtung für den Außenkühlring 51 ist hierbei am weiteren Außenkühlring 61 angeordnet. Die Funktion bleibt die gleiche im Zusammenhang mit Figur 1 beschrieben.

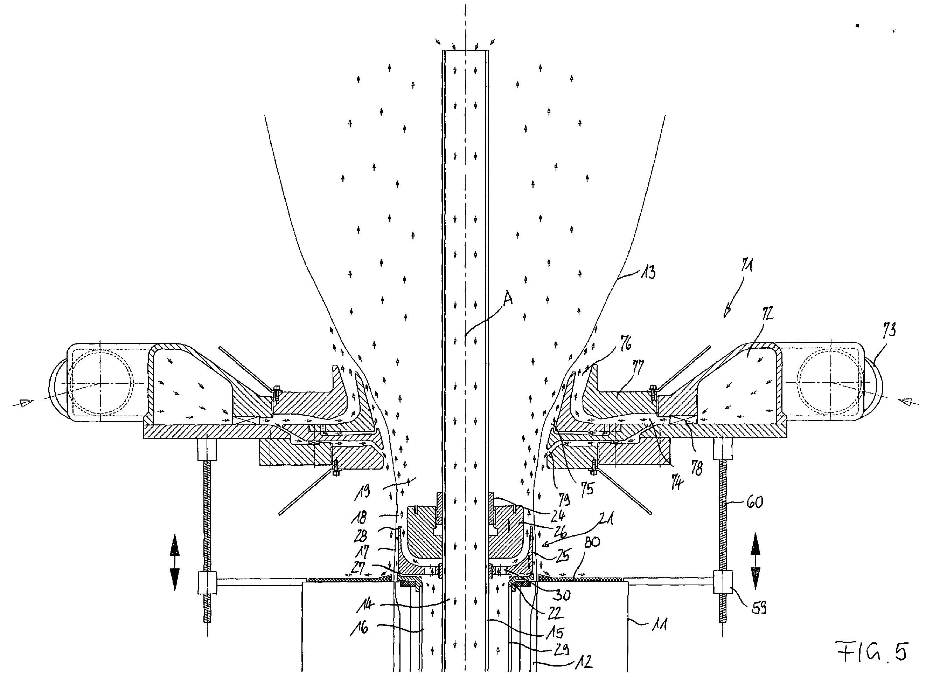

In Figur 5 sind gleiche Einzelheiten wie in den Figuren 2 und 3 mit gleichen Bezugsziffern belegt. Insbesondere ist der Blaskopf 11 und die Innenkühlvorrichtung 21 in Übereinstimmung mit den Figuren 2 und 4 ausgeführt. Auf die vorangehende Beschreibung wird insoweit Bezug genommen. An einem abgewandelten Außenkühlring 71 wird ein Ringkanal 72 über umfangsverteilte Anschlußstutzen 73 mit Kühlgas versorgt. Über eine Strömungsberuhigungszone 78 gelangt das Kühlgas in einen Ringraum 74, von dem aus Ringdüsen 75, 76 mit tangential zur Wandung des Folienschlauches 13 gerichteter Düsenöffnung versorgt werden. Ebenfalls vom Ringraum 74 aus wird eine weitere Ringdüse 79 mit Kühlgas versorgt, die tangential zur Folienschlauchwandung entgegen zur Richtung der Ringdüsen 75, 76 und damit entgegen der Abzugsrichtung des Folienschlauches gerichtet ist.

Das hier in Gegenrichtung zur Produktionsrichtung ausgeblasene Kühlgas wird über eine isolierende Ringplatte 80 auf dem Blaskopf nach außen abgelenkt. Durch den hier gezeigten weiteren Kühlgasaustritt von der Außenseite wird die Kühlwirkung im Vergleich mit den vorhergehenden Ausführungen wesentlich erhöht, so daß die Ausbringungsgeschwindigkeit des Folienschlauches ebenfalls erhöht werden kann.

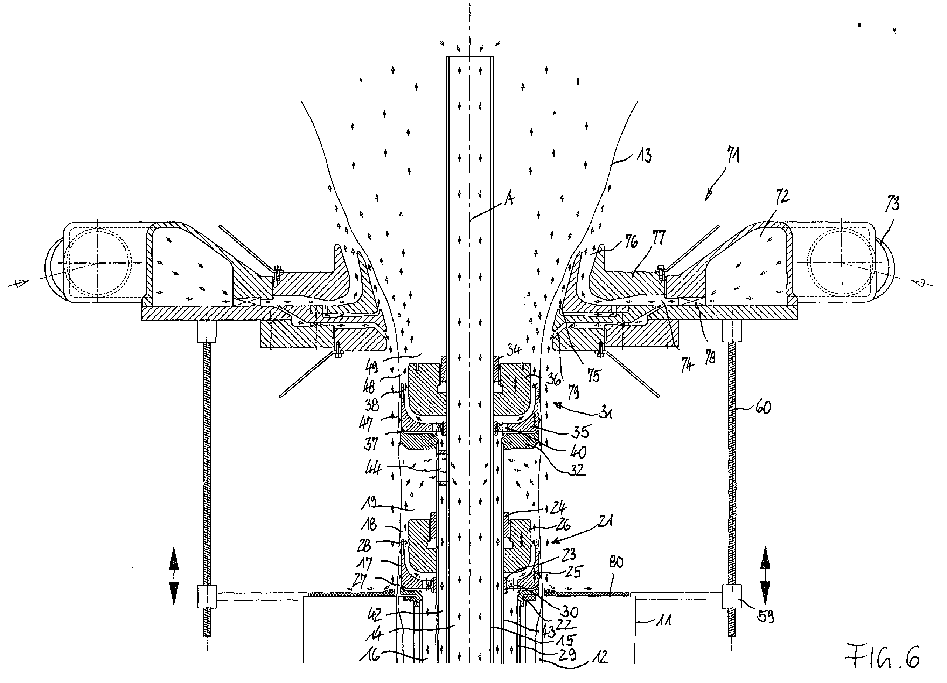

In Figur 6 sind gleiche Einzelheiten wie in Figur 5 mit gleichen Bezugsziffern belegt. Insbesondere der Außenkühlgasring 71 stimmt völlig mit der Darstellung in Figur 5 überein. Auf die vorangehende Beschreibung wird insoweit Bezug genommen. Zwischen dem Zentralrohr 15 und dem Außenrohr 29 ist hierbei ein Zwischenrohr 43 angeordnet, das den Innenkühlring 21 ebenso durchsetzt wie das Zentralrohr 15. Hierbei ist zwischen Zentralrohr 15 und Zwischenrohr 43 ein weiterer Zuführringkanal 42 für Kühlgas ausgebildet.

Das Zentralrohr 15 und das Zwischenrohr 43 tragen einen weiteren Innenkühlring 31, der ähnlich aufgebaut ist wie der erste Innenkühlring 21. Das Zwischenrohr 43 trägt einen ersten Ringkörper 32, während das Zentralrohr 15 einen zweiten Ringkörper 33 und einen dritten Ringkörper 34 in fester Anordnung tragen. Auf dem ersten Ringkörper 33 ist ein höhenverstellbares Ringkörper 35 und auf dem zweiten Ringkörper 34 ein höhenverstellbarer Ringkörper 36 aufgesetzt.

Die Ringkörper 32 und 35 bilden eine erste Kühlgasringdüse 37, die unmittelbar aus dem Zuführkanal 42 mit Kühlgas versorgt wird, während der zweite Ringkörper 95 mit dem dritten Ringkörper 36 eine zweite Kühlgasringdüse 38 bildet, die aus dem zweiten Ringkanal 42 über Durchtrittsöffnungen 40 im Ringkörper 35 mit Kühlgas versorgt wird.

Im zweiten Ringkanal 42 sind umfangsverteilte Durchführungen 44 vorgesehen, durch die aus der ersten Innenkühlvorrichtung 21 ausgebrachte Kühlluft in den Absaugkanal 14 gelangen, um in diesem abgeführt zu werden.

Auch die zweite Innenkühlvorrichtung bildet 31 einen ersten Ringspalt 47 hinter der ersten Ringdüse 37, einen zweiten Ringspalt 48 hinter der zweiten Ringdüse 38 und einen dritten erweiterten Ringspalt 49 zwischen dem Zentralrohr 15 und dem Folienschlauch 13 aus.

### Bezugszeichenliste

- 11: Blaskopf
- 12: Ringdüse
- 13: Folienschlauch
- 14: Kühlgasabsaugkanal
- 15: Zentralrohr
- 16: Kühlgaszuführringkanal (1)
- 17: Ringspalt
- 18: Ringspalt
- 19: Ringspalt
- 20: Innenkühlvorrichtung
- 21: Innenkühlring (1)
- 22: fester Ringkörper
- 23: fester Ringkörper
- 24: fester Ringkörper
- 25: höhenverstellbarer Ringkörper
- 26: höhenverstellbarer Ringkörper
- 27: Kühlgasringdüse
- 28: Kühlgasringdüse
- 29: Außenrohr
- 30: Zuführbohrungen
- 31: Innenkühlring (2)
- 32: fester Ringkörper
- 33: fester Ringkörper
- 34: fester Ringkörper
- 35: höhenverstellbarer Ringköper
- 36: höhenverstellbarer Ringkörper
- 37: Kühlgasringdüse
- 38: Kühlgasringdüse
- 40: Zuführbohrungen
- 41: Aufsatzhülse
- 42: Kühlgaszuführringkanal
- 43: Zwischenrohrringkanal
- 44: Durchführung

- 47: Ringspalt
- 48: Ringspalt
- 49: Ringspalt

- 51: Außenkühlring (1)
- 52: Ringkanal
- 53: Zuführstutzen
- 54: Ringraum
- 55: Kühlgasringdüse
- 56: Kühlgasringdüse
- 57: Ringteil
- 58: Strömungsberuhigungszone
- 59: Halterungen
- 60: Gewindestangen

- 61: Außenkühlring (2)
- 62: Ringkanal
- 63: Gaszuführstutzen
- 64: Ringraum
- 65: Ringdüse
- 67: Ringteil
- 68: Strömungsberuhigungszone
- 71: Außenkühlring (3)
- 72: Ringkanal
- 73: Anschlußstutzen
- 74: Ringraum
- 75: Kühlgasringdüse
- 76: Kühlgasringdüse
- 78: Strömungsberuhigungszone
- 80: Ringplatte
- 81: Rohrdurchführung

- 91:
- 92:
- 93:
- 94:
- 95:
- 96:
- 97:

## Patentansprüche

1. Vorrichtung zum Kühlen eines Folienschlauches bei der Blasfolienherstellung zur Montage auf einem Blaskopf (11), aus dessen Ringdüse (12) der Folienschlauch (13) in Herstellrichtung nach oben austritt, wobei die Vorrichtung zumindest einen den Folienschlauch umschließenden äußeren Kühlgasring (51, 61, 71) mit innenliegenden Kühlgasringdüsen (45, 46; 65; 75, 76, 79) und eine Innenkühlvorrichtung (20) innerhalb des Folienschlauches mit außenliegenden Kühlgasringdüsen (27, 28, 37, 38) und mit einer Kühlgasabsaugung (14) umfaßt,
**dadurch gekennzeichnet,**
**daß** die Innenkühlvorrichtung (20) mindestens einen inneren Kühlgasring (21, 31) mit zwei übereinanderliegenden Kühlgasringdüsen (27, 28, 37, 38) aufweist, daß in Herstellrichtung hinter der unteren der Kühlgasringdüsen (27, 37) ein erster ringförmiger Leitkörper (25, 35) angeordnet ist, der mit der Folienschlauchwandung ein ersten Ringspalt (17) geringerer Dicke bildet, daß in Herstellrichtung hinter der oberen der beiden Kühlgasringdüsen (28, 38) ein zweiter ringförmiger Leitkörper (15, 26, 36, 41) angeordnet ist, der mit der Folienschlauchwandung einen zweiten Ringspalt (19) größerer Dicke bildet.

2. Vorrichtung nach Anspruch 1,
**dadurch gekennzeichnet,**
**daß** die untere der Kühlgasringdüsen (27, 37) im Durchmesser im wesentlichen dem ersten Leitkörper (25, 35) entspricht.

3. Vorrichtung nach einem der Ansprüche 1 oder 2,
**dadurch gekennzeichnet,**
**daß** die obere der Kühlgasringdüsen (28, 38) im Durchmesser innerhalb des ersten Leitkörpers (25, 35) mündet, wobei die Düsenöffnung der oberen Kühlgasringdüse (28, 38) parallel zur oder in spitzem Winkel zur Folienschlauchwandung weist.

4. Vorrichtung nach einem der Ansprüche 1 bis 3,
**dadurch gekennzeichnet,**
**daß** beide Kühlgasringdüsen (27, 28, 37, 38) druckgasbeaufschlagt sind.

5. Vorrichtung nach einem der Anspruch 1 bis 4,
**dadurch gekennzeichnet,**
**daß** die obere der Kühlgasringdüsen (28, 38) eine Austrittsquerschnittsfläche hat, die ein mehrfaches der Austrittsquerschnittsfläche der unteren Kühlgasringdüse (27, 37) beträgt.

6. Vorrichtung nach einem der Ansprüche 1 bis 5,
**dadurch gekennzeichnet,**
**daß** die untere der Kühlgasringdüsen (27, 37) mindestens zwei Austrittsringspalte umfaßt, die von einem gemeinsamen Ringkanal für Kühlgas versorgt werden.

7. Vorrichtung nach einem der Ansprüche 1 bis 6,
**dadurch gekennzeichnet,**
**daß** der erste Leitkörper (25, 35) zylindrisch oder konisch sich verjüngend oder konisch sich erweiternd ist.

8. Vorrichtung nach einem der Ansprüche 1 bis 7,
**dadurch gekennzeichnet,**
**daß** der zumindest eine Innenkühlring (21, 31) im Anfangsbereich des Folienschlauches (13) angeordnet ist, insbesondere unmittelbar über der Ringdüse (12) des Blaskopfes (11).

9. Vorrichtung nach einem der Ansprüche 1 bis 7,
**dadurch gekennzeichnet,**
**daß** der zumindest eine Innenkühlring (21, 31) mit axialem Abstand zur Ringdüse (12) des Blaskopfes (11) angeordnet ist.

10. Vorrichtung nach Anspruch 9,
**dadurch gekennzeichnet,**
**daß** der zumindest eine Innenkühlring (21, 31) höhenverstellbar gegenüber der Ringdüse (12) des Blaskopfes (11) angeordnet ist.

11. Vorrichtung nach einem der Ansprüche 1 bis 10,
**dadurch gekennzeichnet,**
**daß** der zumindest eine Außenkühlring (71) zumindest eine weitere Kühlgasringdüse (79) aufweist, die parallel zur oder in spitzem Winkel zur Folienschlauchwandung weist und entgegen der Herstell- und Abzugsrichtung des Folienschlauches mündet.

12. Vorrichtung nach einem der Ansprüche 1 bis 13,
**dadurch gekennzeichnet,**
**daß** mit Abstand zum ersten Innenkühlring (21) ein weiterer Innenkühlring (31) mit den Merkmalen des ersten Innenkühlrings (21) vorgesehen ist und daß zwischen dem ersten Innenkühlring (21) und dem weiteren Innenkühlring (31) zentrale Kühlgasabsaugmittel vorgesehen sind.

13. Vorrichtung nach einem der Ansprüche 1 bis 12,
**dadurch gekennzeichnet,**
**daß** der weitere Innenkühlring (31) in Herstellrichtung vor dem zumindest einen Außenkühlring (41, 71) angeordnet ist.

14. Vorrichtung nach einem der Ansprüche 1 bis 13,
**dadurch gekennzeichnet,**
**daß** ein zusätzlicher Außenkühlring (61) vorgesehen ist, der vor dem zumindest einen Außenkühlring (41, 71) im Anfangsbereich des Folienschlauches (13) angeordnet ist, insbesondere unmittelbar über der Ringdüse (12) des Blaskopfes (11).
